# EUROPEAN PATENT APPLICATION

(11) **EP 1 698 605 A2**
(43) Date of publication of application: **06.09.2006**
(21) Application number: 06002662.2
(22) Date of filing: 09.02.2006
(51) Int. Cl.: C04B 37/00

(54) **Method of making a ceramic arc discharge vessel and ceramic arc discharge vessel made by the method**

(30) Priority: 03.03.2005 US 906725
(71) Applicant: OSRAM-SYLVANIA INC., 01923 Danvers, MA (US)
(72) Inventor: Caldwell, Dana L., 01949 Middleton MA (US); Hecker, Arlene, 01915 US-Beverly MA (US); Kotter, Stefan, 94094 Rotthalmünster 2 (DE)
(74) Representative: Pokorny, Gerd

(57) **Abstract**

A method of bonding two ceramic parts to each other includes the steps of preparing a water-based slurry from Al₂O₃ powder and Y(NO₃)₃ solution in amounts that yield a eutectic compound of Al₂O₃ and Y₂O₃ when heated, placing the slurry in liquid, solid or gaseous form in direct contact with two ceramic parts that are to be bonded to each other, and heating the slurry to a temperature that bonds the two ceramic parts to each other. The method is particularly useful to join two ceramic parts where one is comprised of polycrystalline alumina and the other is comprised of one of single crystal alumina and polycrystalline alumina, such as an arc discharge vessel for a high intensity discharge lamp.

## Description

### Background of the Invention

The present invention is directed to a method of joining two ceramic parts to each other and to an article that includes two ceramic parts that are bonded together, and more particularly to a method of making an arc discharge vessel and to the vessel itself in which two ceramic parts are bonded to each other.

The ability to bond two ceramic parts to each other is a particularly desirable skill in a variety of fields, notably the manufacture of arc discharge vessels where at least one of the two ceramic parts is transparent or nearly so. Various methods for bonding two ceramic parts to each other are known.

For example, U.S. Patent 6,012,303 (Axelson et al.) discloses a method of eutectic bonding two single crystal components to each other. The method joins one single crystal sapphire component (sapphire being a transparent ceramic) to another single crystal sapphire component. The two components are bonded together with a slurry that includes aluminum oxide powder and yttrium oxide powder (or a sol of these). However, the homogeneity of the mixture is difficult to achieve and maintain and milling is required to mix the powders, which can introduce impurities and increase cost. The two sapphire components are heated in a vacuum furnace for more than 6 hours and weight is placed on the two components to keep them together. Several additional hours are needed for cooling.

The need for a more efficient method of bonding two ceramic parts exists, particularly where one of the parts is a polycrystalline alumina (PCA) ceramic, and the present invention offers a solution to this problem.

### Summary of the Invention

An object of the present invention is to provide a novel method of joining two ceramic parts to each other and a novel article that includes two ceramic parts bonded to each other where one of the parts is comprised of polycrystalline alumina and the other is comprised of single crystal alumina (sapphire) or polycrystalline alumina. Alternately, one or both of the ceramic parts may be comprised of yttrium aluminum garnet.

A further object of the present invention is to provide a novel method of bonding two ceramic parts that includes preparing a slurry of Al₂O₃ powder and Y(NO₃)₃ solution, placing the slurry in liquid, solid or gaseous form in contact with the two ceramic parts, and heating the slurry to a temperature that bonds the two ceramic parts to each other.

More particularly, the slurry forms a eutectic compound of Al₂O₃ and Y₂O₃ when fired and the temperature to which the slurry is heated is the eutectic temperature of the eutectic compound, and one of the two ceramic parts is comprised of polycrystalline alumina and the other is comprised of one of single crystal alumina and polycrystalline alumina.

The heating of the eutectic compound may be carried out with a CO₂ laser or by RF heating.

A yet further object of the present invention is to provide a novel article that includes two ceramic parts that are bonded to each other with a eutectic compound of Al₂O₃ and Y₂O₃, where one of the two ceramic parts is comprised of polycrystalline alumina and the other is comprised of one of single crystal alumina and polycrystalline alumina.

These and other objects and advantages of the invention will be apparent to those of skill in the art of the present invention after consideration of the following drawings and description of preferred embodiments.

### Brief Description of the Drawings

Figure 1 is a pictorial representation of two parts that are to be bonded by the method of the present invention using the liquid slurry.

Figure 2 is a cross section of two parts that are to be bonded by the method of the present invention using the solid disk of the eutectic compound of Al₂O₃ and Y₂O₃.

### Description of Preferred Embodiments

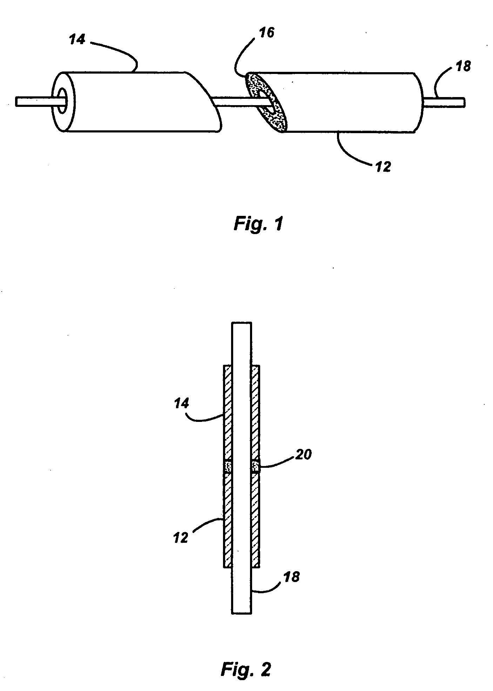

With reference to Figure 1, an embodiment of the present invention is a method of bonding two ceramic parts 12, 14 to each other. The method includes the steps of preparing a water-based slurry that includes Al₂O₃ and Y(NO₃)₃ in amounts that yield a eutectic compound of Al₂O₃ and Y₂O₃ when heated, placing the slurry in direct contact with two ceramic parts that are to be bonded to each other, and heating the slurry to a temperature that bonds the two ceramic parts to each other.

The method of the first embodiment is advantageously used when one of the two ceramic parts 12, 14 is comprised of polycrystalline alumina and the other is comprised of one of a single crystal alumina and a polycrystalline alumina. The method is also expected to work when one or both of the parts is comprised of yttrium aluminum garnet (YAG).

The slurry may be formed by preparing a water-based mixture of aluminum oxide powder (Al₂O₃) and a yttrium nitrate precursor solution (Y(NO₃)₃) that yields a eutectic compound (or nearly so) of 80 mol% Al₂O₃ and 20 mol% Y₂O₃ after firing. Milling is not required.

The slurry may take a form suitable for the particular application of the method. For example, the slurry may be applied as a liquid 16 to a beveled end of one of the two parts 12 and 14 (for example, a PCA tube) and dried in air by heating for about 30 seconds with a laser (e.g., a CO₂ laser) to form the eutectic compound of Al₂O₃ and Y₂O₃. The other part (for example, a sapphire tube) may be stacked on the eutectic-coated beveled end of the first part and aligned using a rod 18 (e.g., tungsten). The assembly may then be rotated on a lathe while heating the joint area to the eutectic temperature with the laser. The eutectic melts and flows onto the ceramic surfaces forming a strong bond.

The slurry may also be solidified before placement between the two parts 12, 14. For example, the slurry may be bisque-fired in air to about 1350°C to form a disk 20 of the eutectic compound of Al₂O₃ and Y₂O₃ that is placed between the two parts 12, 14, such as shown in cross section in Figure 2. As illustrated therein, the first part 12 (such as a PCA tube) may be bonded to the second part 14 (such as a sapphire tube) by placing the disk 20 of the solidified slurry between the two tubes, aligning the two tubes and the disk by placing the rod 18 through all three parts, and heating the disk to a temperature that causes the disk 20 to melt to bond the two tubes together.

RF heating may be used instead of the laser to melt the disk. The assembly of the two parts 12 and 14 and the disk 20 may be joined by RF heating the assembly in an argon atmosphere to a temperature hot enough to melt the disk (> 1780°C) but below the melting temperature of the two parts (for example, below the 2050°C melting temperature of PCA).

Other heating devices such as a tungsten element furnace may also be used; however the above-described laser and RF methods have been particularly advantageous because the time needed to heat and then cool the article is considerably reduced, to minutes in some instances.

The slurry may also be deposited on the two parts as a vapor-deposited coating of the gasified slurry.

The method of the present invention may be used to make an article that includes a first ceramic part comprised of polycrystalline alumina and a second ceramic part that is comprised of one of single crystal alumina and polycrystalline alumina, where the first and second ceramic parts are bonded to each other with a eutectic compound of Al₂O₃ and Y₂O₃. The particular geometry of the two ceramic parts is not significant, and the description above and the drawings of tubular parts herein are but examples. Indeed, the method may be applied to ceramic sealing processes to replace conventional frit seals, for example found in high intensity discharge lamps. The joint formed by the method is hermetic, resistant to chemical attack, and is able to withstand higher temperatures (e.g., > 1700°C) than conventional frits.

The method offers particular advantages to the manufacture of arc discharge vessels. The vessels may be fully sintered and have various shapes, not being limited to the conventional tubular shapes of arc discharge vessels. This adaptability permits the use of a wider range of geometries than currently feasible for transparent ceramics, such as sapphire, thereby improving lamp performance and reducing cost. In addition, the wider range of geometries permits hitherto unavailable application of these transparent ceramics in other fields such as optical systems.

In contrast to the above-noted U.S. patent to Axelson et al., the method of the present invention bonds polycrystalline alumina parts to each other or to a single crystal alumina part. The bonding mixture includes a water-based slurry of aluminum oxide powder (Al₂O₃) and a yttrium nitrate precursor (Y(NO₃)₃) that mix together more easily and homogeneously relative to the two powders disclosed in the patent. No milling is necessary; upon heating the yttrium nitrate precursor converts to an oxide. Further, the RF and laser heating are considerably faster than the furnace of the prior art.

While embodiments of the present invention have been described in the foregoing specification and drawings, it is to be understood that the present invention is defined by the following claims when read in light of the specification and drawings.

## Claims

1. A method of bonding two ceramic parts to each other, the method comprising the steps of:
preparing a water-based slurry that includes Al₂O₃ and Y(NO₃)₃ in amounts that yield a eutectic compound of Al₂O₃ and Y₂O₃ when fired;
placing the slurry in direct contact with two ceramic parts that are to be bonded to each other, wherein one of the two ceramic parts is comprised of polycrystalline alumina and the other is comprised of one of single crystal alumina and polycrystalline alumina; and
heating the slurry to a temperature that bonds the two ceramic parts to each other.

2. The method of claim 1, wherein one of the two ceramic parts is comprised of polycrystalline alumina and the other is comprised of single crystal alumina.

3. The method of claim 1, wherein the water-based slurry is prepared from Al₂O₃ powder and Y(NO₃)₃ solution.

4. The method of claim 1, wherein the heating step comprises the step of heating the slurry with a laser beam.

5. The method of claim 5, wherein the laser beam is formed by a CO₂ laser.

6. The method of claim 1, wherein the slurry is solidified before the placing step.

7. The method of claim 7, wherein the slurry is a disk that is placed between the two ceramic parts.

8. The method of claim 8, wherein the heating step comprises the step of melting the disk with RF energy.

9. The method of claim 1, wherein the placing step comprises the step of applying the slurry in liquid form to at least one of the two parts.

10. The method of claim 1, wherein the placing step comprises the step of forming a vapor from the slurry and depositing a coating of the vaporized slurry on at least one of the two parts.

11. A method of bonding two ceramic parts to each other, the method comprising the steps of:
placing a eutectic compound of Al₂O₃ and Y₂O₃ in direct contact with two ceramic parts that are to be bonded to each other, wherein one of the two ceramic parts is comprised of polycrystalline alumina and the other is comprised of one of single crystal alumina and polycrystalline alumina; and
heating the eutectic compound to a temperature that melts the eutectic compound and bonds the two ceramic parts to each other.

12. The method of claim 12, wherein one of the two ceramic parts is comprised of polycrystalline alumina and the other is comprised of single crystal alumina.

13. The method of claim 12, wherein the heating step comprises the step of heating the compound with a laser beam.

14. The method of claim 12, further comprising the steps of preparing the eutectic compound by making a water-based slurry from Al₂O₃ powder and Y(NO₃)₃ solution and firing the slurry to yield the eutectic compound.

15. The method of claim 15, wherein the firing step yields a solid that comprises the eutectic compound and wherein the placing step includes placing the solid in direct contact with the two ceramic parts before the heating step.

16. The method of claim 12, further comprising the steps of preparing the eutectic compound by making a water-based slurry from Al₂O₃ powder and Y(NO₃)₃ solution and wherein the placing step comprises vaporizing the slurry and vapor depositing a coating of the vaporized slurry on at least one of the two parts.

17. The method of claim 12, further comprising the steps of preparing the eutectic compound by making a water-based slurry from Al₂O₃ powder and Y(NO₃)₃ solution and wherein the placing step comprises the step of applying the slurry in liquid form to one of the two ceramic parts.

18. An article comprising a first ceramic part comprised of polycrystalline alumina and a second ceramic part that is comprised of one of single crystal alumina and polycrystalline alumina, where the first and second ceramic parts are bonded to each other with a eutectic compound of Al₂O₃ and Y₂O₃.

19. The article of claim 19, wherein one of the two ceramic parts is comprised of polycrystalline alumina and the other is comprised of single crystal alumina.

20. A method of bonding two ceramic parts to each other, the method comprising the steps of:
placing a eutectic compound of Al₂O₃ and Y₂O₃ in direct contact with two ceramic parts that are to be bonded to each other, wherein one of the two ceramic parts is comprised of yttrium aluminum garnet and the other is comprised of one of single crystal alumina, yttrium aluminum garnet, and polycrystalline alumina; and
heating the eutectic compound to a temperature that melts the eutectic compound and bonds the two ceramic parts to each other.

21. An article comprising a first ceramic part comprised of yttrium aluminum garnet and a second ceramic part that is comprised of one of single crystal alumina, yttrium aluminum garnet, and polycrystalline alumina, where the first and second ceramic parts are bonded to each other with a eutectic compound of Al₂O₃ and Y₂O₃.
